# EUROPEAN PATENT SPECIFICATION

(11) **EP 0 461 996 B1**
(45) Date of publication and mention of the grant of the patent: **22.01.1997**
(21) Application number: 91401551.6
(22) Date of filing: 11.06.1991
(51) Int. Cl.: H04N 5/208

(54) **Picture processing apparatus**
Bildverarbeitungsgerät
Appareil de traitement d'image

(30) Priority: 12.06.1990 JP 153598/90
(43) Date of publication of application: 18.12.1991
(73) Proprietor: SONY CORPORATION, Tokyo (JP)
(72) Inventor: Kishimoto, Masaki, c/o SONY CORPORATION, Tokyo (JP); Takano, Hiroaki, c/o SONY CORPORATION, Tokyo (JP)
(74) Representative: Thévenet, Jean-Bruno

(56) References cited:
- WO-A-89/01269
- GB-A- 2 162 402
- US-A- 4 570 193
- US-A- 4 733 300

## Description

### BACKGROUND OF THE INVENTION

### Field of the Invention

The invention relates to a television signal processing apparatus, more particularly, to an outline enhancing circuit of a television signal which is applied to a television signal of one pseudo frame formed by interpolation from the television signal of one field.

### Description of the Prior Art

In a video printer to obtain a hard copy of a television image, in the case where an image of one frame has been printed, there is a problem in that a resultant image-blur occurs due to the interlace scan. There is thus a printed pseudo frame image, produced from one field of the original television signal. As mentioned above, to form the psuedo frame signal from the field signal, it is necessary to optimise the insufficient information by interpolation. As an interpolating method, a method whereby a mean value between lines of the signal of the original field is calculated and the mean value is used as a signal of the other fields to be interpolated has been known.

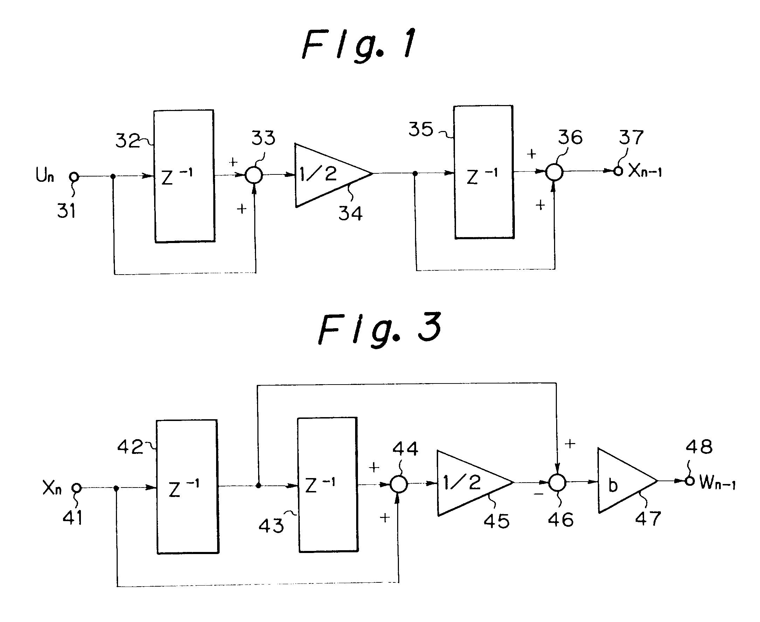

Fig. 1 shows an example of a circuit to interpolate a mean value between lines. Reference numeral 31 denotes an input terminal. Input data Un is data of a source (original) field such as an evennumbered field, in which pixel data of columns in the vertical direction are located in accordance with the order from the upper position to the lower position. That is, data corresponding to the horizontal scan of the ordinary television scan is changed to data of the vertical scan. There are provided delay circuits 32 and 35 each having a delay amount corresponding to a sampling period of the pixel data on a time base in the vertical direction.

The input data Un and output data of the delay circuit 32 are added by an adder 33. An output of the adder 33 is supplied to a 1/2 magnifying circuit 34. An output of the 1/2 magnifying circuit 34 is supplied to the delay circuit 35. The output of the 1/2 magnifying circuit 34 and an output of the delay circuit 35 are supplied to an adder 36. An output Xₙ₋₁ of the adder 36 is taken out to an output terminal 37. The output Xₙ₋₁ is used as data of the interpolated field, for example, the odd-numbered field.

A transfer function TFi(Z) of the interpolating circuit shown in Fig. 1 is expressed by the following equation.${\text{TFi(Z) = 1/2(Z + 2 + Z}}^{\text{-1}} \text{)}$

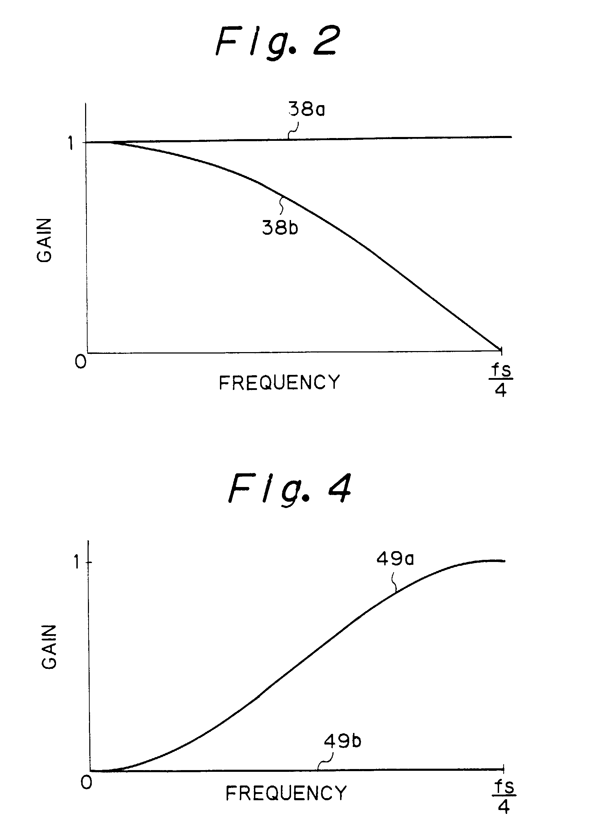

Therefore, although the data of the evennumbered field as a source field has a flat frequency characteristic shown by reference numeral 38a in Fig. 2, the data of the odd-numbered field as an interpolation field is such that, as shown by reference numeral 38b, a gain decreases as a frequency rises and the gain is equal to 0 at a frequency of 1/4 fs (fs: sampling frequency on the time base in the vertical direction).

The above line mean interpolation can be realized by a very simple construction and is preferable from viewpoints of gradations, jerkiness, and the like as compared with a method of producing a frame signal by generating the signal of the same field twice. However, there are problems such that a vertical definition is low and the image blurs. Therefore, to improve an apparent sharpness, an outline in the vertical direction is enhanced.

Fig. 3 shows an example of a conventional outline enhancing circuit. Delay circuits 42 and 43 each having a delay amount of a vertical sampling period are serially connected to an input terminal 41. Input data Xₙ and an output of the delay circuit 43 are supplied to an adder 44. An output of the adder 44 which has been transmitted through a 1/2 magnifying circuit 45 and an output of the delay circuit 42 are supplied to a subtracter 46. An output signal of the subtracter 46 is taken out to an output terminal 48 as an output signal Wₙ₋₁ through an amplifier 47 of a gain b.

The conventional outline enhancing circuit executes a process of${\text{W}}_{\text{n}} {\text{= 1/2 b(-X}}_{\text{n-1}} {\text{+ 2X}}_{\text{n}} {\text{- X}}_{\text{n+1}} \text{).}$ As a result, the data of three pixels comprising : an object pixel,as an object to be processed, and upper and lower pixels of the object pixel are digitally subjected to a quadratic differentiation. A transfer function TFe'(Z) from the input terminal 41 of the outline enhancing circuit to the output terminal 48 is as follows.${\text{TFe′(Z) = 1/2 b(-Z + 2 - Z}}^{\text{-1}} \text{)}$

The interpolating circuit shown in Fig. 1 and the outline enhancing circuit shown in Fig. 3 are serially connected to the data of the interpolation field. Therefore, an overall transfer function from the input terminal 31 in Fig. 1 to the output terminal 48 in Fig. 3 is obtained by multiplying the transfer functions shown by the equations (1) and (2).${\text{TFi(Z) TFe'(Z) = 1/4 b(-Z}}^{\text{2}} {\text{+ 2 - Z}}^{\text{2}} \text{)}$

For the signal of the source field (even-numbered field) having the flat frequency characteristic 38a, the output signal of the outline enhancing circuit has a frequency characteristic as shown at reference numeral 49a in Fig. 4 in which a high frequency band is emphasized. On the other hand, for the signal of the interpolation field (odd-numbered field) having the frequency characteristic 38b in which a high frequency band is reduced, the output signal of the outline enhancing circuit has a frequency characteristic shown at reference numeral 49b. Here, no quadratic differentiation component is generated and there is a problem such that the effect of the outline enhancement is not obtained. Thus, there is a problem such that the frequency characteristics are quite different between two fields.

US-A-4,733,300 describes television signal processing devices incorporating interpolators. When the image contains little motion, the interpolators perform a temporal interpolation between sampled values of adjacent fields of the input television signal but, when the image contains a lot of motion, vertical interpolation is performed between sampled values of adjacent lines of the input signal. The apparatus of US-A-4,733,300 calculates a contour enhancement component in respect of each sample pixel and interpolated pixel in tum and adds this component to the object pixel value.

In certain embodiments described in US-A-4,733,300, the interpolator is a switched interpolator which, when implementing spatial interpolation, does not generate an enhancement component for the interpolated pixels. In other embodiments, the interpolator implements a mixture of temporal and spatial interpolation depending on the degree of motion in the image. In such devices, the extent to which an enhancement component is generated for interpolated pixels depends on the degree of motion in the image.

### OBJECTS AND SUMMARY OF THE INVENTION

It is, therefore, an object of the invention to provide a signal processing apparatus for a television signal in which a jerkiness can be suppressed and a good sharpness can be obtained by a simple circuit construction.

According to an aspect of the present invention, there is provided a television signal processing apparatus for constructing an image plane by interpolation between sampled values of pixels in a field of an input television signal, comprising:
means for applying a vertical line-mean interpolation between two neighbouring sample pixel values of said field of the input television signal whereby to produce an interpolated pixel value;
means for determining the value of an enhancement component for an object pixel value, the enhancement component determining means comprising a one-dimensional digital filter operative on a plurality of pixel values selected from the group comprising the object pixel value and values of adjacent sampled pixels and vertically-interpolated pixels aligned with the object pixel in the vertical direction and being adapted to treat each sampled pixel value and vertically-interpolated pixel value in turn as the object pixel value; and
means for adding the enhancement component to the corresponding sampled pixel value or to the vertically-interpolated pixel value;
characterised in that the digital filter in the enhancement component determining means is adapted to operate on values of a group of five or more pixels aligned in said vertical direction whereby to present similar frequency transmission characteristics to the sampled pixel values and to the vertically-interpolated pixel values.

The present invention further provides television signal processing apparatus for constructing an image plane by interpolation between sampled values of pixels in a field of an input television signal, comprising:
means for applying a horizontal interpolation by averaging of two horizontally-adjacent sampled pixel values of said field of the input television signal whereby to produce an interpolated pixel value;
means for determining the value of an enhancement component for an object pixel value, the enhancement component determining means comprising a one-dimensional digital filter operative on a plurality of pixel values selected from the group comprising the object pixel value and values of adjacent sampled pixels and horizontally-interpolated pixels aligned with the object pixel in the horizontal direction and being adapted to treat each sampled pixel value and horizontally-interpolated pixel value in turn as the object pixel value; and
means for adding the enhancement component to the corresponding sampled pixel value or horizontally-interpolated pixel value;
characterised in that the digital filter in the enhancement component determining means is adapted to operate on values of a group of five or more pixels aligned in said horizontal direction whereby to present similar frequency transmission characteristics to the sampled pixel values and to the horizontally-interpolated pixel values.

Advantageously, three adjacent pixel data are used for the line mean interpolation. The outline enhancing circuit which is connected to the line mean interpolation apparatus, uses the object pixel and four (or more) upper and lower or right and left pixels. Thus, the outline enhancing effect is also provided for the interpolation field. When the outline has been enhanced, the frequency characteristics between the source field and the interpolation field do not differ by so much.

The above, and other, objects, features and advantages of the present invention will become readily apparent from the following detailed description thereof which is to be read in connection with the accompanying drawings.

### BRIEF DESCRIPTION OF THE DRAWINGS

Fig. 1 is a block diagram of line mean interpolating circuit;
Fig. 2 is a schematic diagram showing frequency characteristics of the fields interpolated by the line mean interpolation circuit;
Fig. 3 is a block diagram of a conventional outline enhancing circuit;
Fig. 4 is a schematic diagram showing the frequency characteristics of the conventional outline enhancing circuit;
Fig. 5 is a block diagram of an embodiment of the invention;
Fig. 6 is a schematic diagram showing the frequency characteristics of the embodiment of the invention;
Fig. 7 is a block diagram showing the complete construction of the embodiment of the invention; and
Fig. 8 is a schematic diagram for explaining the operation of the embodiment of the invention.

### DETAILED DESCRIPTION OF THE PREFERRED EMBODIMENTS

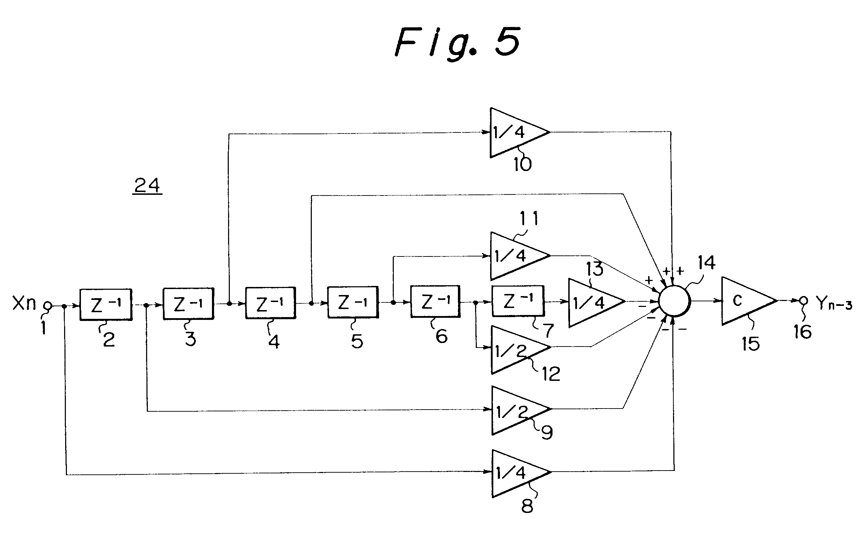

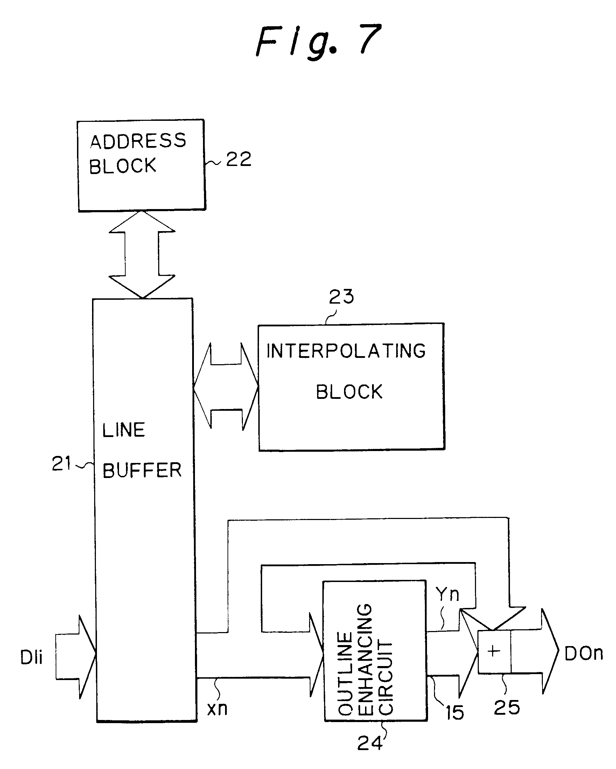

An embodiment of the invention will be described hereinbelow with reference to the drawings Fig. 5 shows a construction of an outline enhancing circuit 24 according to the embodiment. As shown in Fig. 7, data from a line buffer 21 is supplied through a data bus to an input terminal 1 in Fig. 5.

The line buffer 21 is constructed by, for instance, a RAM of sufficient capacity to store pixel data of one column in the vertical direction of an image of one frame. An address signal of the line buffer 21 is formed by an address block 22. An interpolating block 23 is connected to the line buffer 21 through the data bus. The interpolating block 23 has the construction shown in Fig. 1 mentioned above and generates interpolation data from the original data by the line mean interpolation. The interpolation data is written into the line buffer 21.

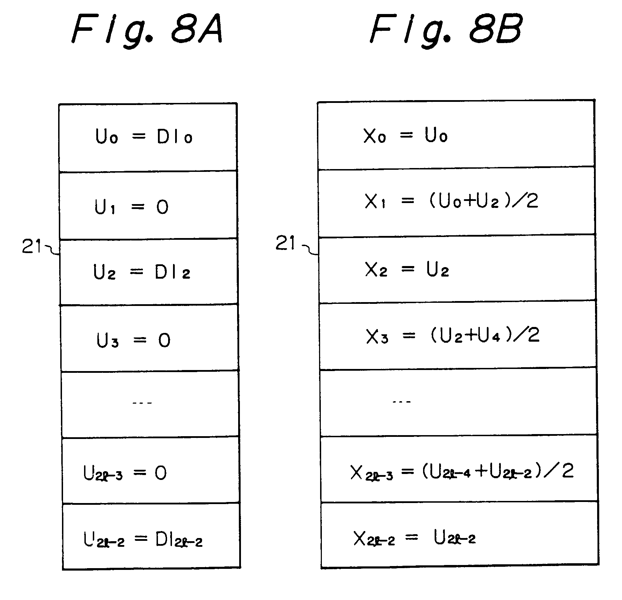

Input data is supplied to the line buffer 21. The input data is read out of a field memory (not shown). Data DIi (i = 0, 2, 4, ...., 2 ℓ - 2; ℓ denotes the number of pixels of one column) of one column in the vertical direction are sequentially written into the line buffer 21 from the field memory. In this case, both of the data DIi and the zero data are alternately written as shown in Fig. 8A by the address control from the address block 22. A data train stored in the line buffer 21 is expressed by Un (n = 0, 1, 2, ..., 2 ℓ - 2).

The data train Un from the line buffer 21 is then sequentially generated and supplied to the interpolating block 23. In the interpolating block 23, the following mean interpolations between lines are performed.${\text{X}}_{\text{2m}} {\text{= U}}_{\text{2m}} \text{(m = 0, 1, ..., ℓ - 1)}$${\text{X}}_{\text{2m+1}} {\text{= (u}}_{\text{2m}} {\text{+ u}}_{\text{2m+2}} \text{)/2 (m = 0, 1, ..., ℓ - 2)}$

The data train Xn is again transferred to the line buffer 21. Therefore, as shown in Fig. 8B, there is formed the data of one column in which the zero data has been substituted to the interpolation data.

The data series Xn including the interpolation data are sequentially generated from the line buffer 21 and supplied to the outline enhancing circuit 24 and an adder 25. In the adder 25, an outline enhancing component Yn formed by the outline enhancing circuit 24 is added to the output data series Xn of the line buffer 21. Outline enhanced output data DOn (= Xn + Yn) is derived from the adder 25. In the case of a video printer, the output data DOn is pulse width modulated or amplitude modulated in accordance with the value of each data, so that it is converted into the driving signal. The driving signal is supplied to a thermal head through a driving amplifier. The terminal head is simultaneously executes the printing operations of one column onto a paper which is fed at a predetermined speed through an ink ribbon on which a sublimation dye and been coated.

An example of the outline enhancing circuit 24 to which the invention is applied will now be described with reference to Fig. 5. Delay circuits 2, 3, 4, 5, 6, and 7 each have a delay amount of a sample held period on the time base in the vertical direction and are serially connected to the input terminal 1 to which the data series Xn from the line buffer 21 are supplied. Coefficient multipliers 8, 9, 10, 11, 12, and 13 are respectively connected to the input terminal 1 (for multiplier 8) and taps which are led out from the nodes among the delay circuits 2 to 7 (for mulitpliers 9-13 respectively). The weighted outputs of the multiplier circuits are synthesized by a synthesizing circuit 14, whose output is taken out to an output terminal 16 through an amplifier 15 having a gain c. The gain c of the amplifier 15 is adjustable, thereby enabling an enhancement degree to be varied.

Thus, the data from the input terminal 1 is supplied to the coefficient multiplier 8 of 1/4. A signal which is obtained by inverting an output signal of the coefficient multiplier 8 is supplied to the synthesizing circuit 14. An output signal of the delay circuit 2 is supplied to the coefficient multiplier 9 of 1/2. A signal which is obtained by converting an output signal of the coefficient multiplier 9 is supplied to the synthesizing circuit 14. An output signal of the delay circuit 3 is supplied to the synthesizing circuit 14 through the coefficient multiplier 10 of 1/4. An output signal of the delay circuit 4 is supplied to the synthesizing circuit 14. An output signal of the delay circuit 5 is supplied to the synthesizing circuit 14 through the coefficient multiplier 11 of 1/4. An output signal of the delay circuit 6 is supplied to the coefficient multiplier 12 of 1/2. A signal which is obtained by inverting an output signal of the coefficient multiplier 12 is supplied to the synthesizing circuit 14. An output signal of the delay circuit 7 is supplied to the coefficient multiplier 13 of 1/4. A signal which is obtained by inverting an output signal of the coefficient multiplier 13 is supplied to the synthesizing circuit 14.

In the outline enhancing circuit 24 shown in Fig. 5, an outline enhancing component is formed from total of seven pixel data comprising the data of an object pixel, three pixel data on the upper side of the object pixel, and three pixel data on the lower side of the object pixel. That is, when the output data of the delay circuit 4 assumes data Xn of the object pixel, the enhancing component Yn corresponding to the data Xn is given by the following equation.${\text{Y}}_{\text{n}} {\text{= 1/4 c(-X}}_{\text{n-3}} {\text{- 2X}}_{\text{n-2}} {\text{+ X}}_{\text{n-1}} {\text{+ 4X}}_{\text{n}} {\text{+ X}}_{\text{n+1}} {\text{- 2X}}_{\text{n+2}} {\text{- X}}_{\text{n+3}} \text{)}$ where, X₋₃ = X₋₂ = X₋₁ = X₀${\text{X}}_{\text{2ℓ-1}} {\text{= X}}_{\text{2ℓ}} {\text{= X}}_{\text{2ℓ+1}} {\text{= X}}_{\text{2ℓ-2}}$

A transfer function TFe(Z) between the input terminal 1 of the above outline enhancing circuit 24 and the output terminal 16 is as follows.${\text{TFe(Z) = 1/4 c(-Z}}^{\text{3}} {\text{- 2Z}}^{\text{2}} {\text{+ Z + 4 + Z}}^{\text{-1}} {\text{- 2Z}}^{\text{-2}} {\text{- Z}}^{\text{-3}} \text{)}$

Therefore, a transfer function regarding the interpolation field is as follows.${\text{TFe(Z) · TFi(Z) = c/8 (-Z}}^{\text{4}} {\text{- 4Z}}^{\text{3}} {\text{-4Z}}^{\text{2}} \text{+ 4Z + 10} {\text{+ 4Z}}^{\text{-1}} {\text{- 4Z}}^{\text{-2}} {\text{- 4Z}}^{\text{-3}} {\text{- Z}}^{\text{-4}} \text{)}$

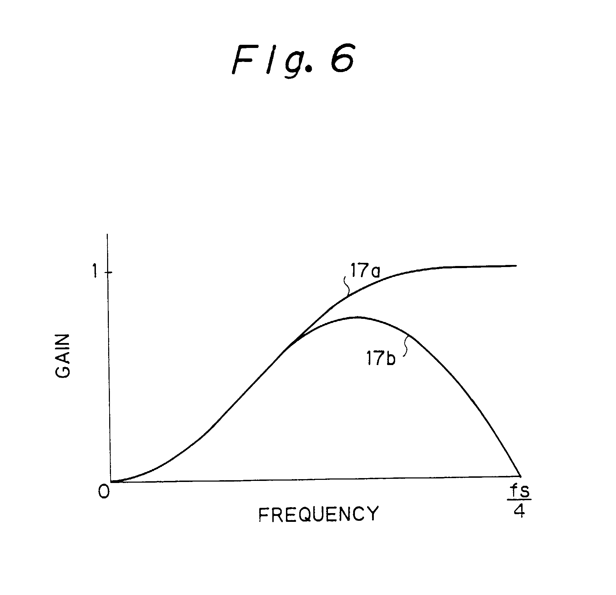

A frequency characteristic for the interpolation field, for instance, the odd-numbered field, is as shown at reference numeral 17b in Fig. 6 from the above transfer function. On the other hand, a frequency characteristic for the source field, for instance, the even-numbered field is as shown at reference numeral 17a from the transfer function TFe(Z) shown by the equation (5). As will be understood from Fig. 6, the outline enhancing effect is also derived for the interpolation field. On the other hand, there is no large difference between the frequency characteristics of the interpolation field and the source field. Further, by enhancing a relatively low frequency band, an aliasing component in the vertical direction of the image can be made inconspicuous.

As will be understood from the above embodiment, according to the invention, a difference between the frequency characteristics of the interpolation field and the source field which occurs by the line mean interpolation is corrected and, after that, the enhancing process is performed. Therefore, a frequency characteristic which is closer to a flat characteristic can be also provided for the interpolation field without limiting to the frequency characteristic 17b in Fig. 6.

In the case of converting the frame image into the frame of a double density by the interpolation, the invention is not limited to the columns in the vertical direction but can be also applied to the case of performing the interpolation with respect to the columns (rows) in the horizontal direction. In addition, the invention can be applied to the case of magnifying the image by executing the interpolation with respect to both of the vertical and horizontal directions, and the like.

According to the invention, the outline enhancement can be also performed for the field interpolated by the data of two adjacent pixels. It is possible to prevent that the frequency characteristics of the source field and the interpolation field largely differ when the outline has been enhanced. Further, since the signal processing circuit of the invention enhances the relatively low frequency band, the aliasing component in the vertical direction of the image can be made inconspicuous.

## Claims

1. Television signal processing apparatus for constructing an image plane by interpolation between sampled values of pixels in a field of an input television signal, comprising:
means (23) for applying a vertical line-mean interpolation between two neighbouring sampled pixel values of said field of the input television signal whereby to produce an interpolated pixel value;
means (24) for determining the value of an enhancement component for an object pixel value, the enhancement component determining means (24) comprising a one-dimensional digital filter (2-14) operative on a plurality of pixel values selected from the group comprising the object pixel value and values of adjacent sampled pixels and vertically-interpolated pixels aligned with the object pixel in the vertical direction and being adapted to treat each sampled pixel value and vertically-interpolated pixel value in turn as the object pixel value; and
means (25) for adding the enhancement component to the corresponding sampled pixel value or vertically-interpolated pixel value;
characterised in that the digital filter (2-14) in the enhancement component determining means (24) is adapted to operate on values of a group of five or more pixels aligned in said vertical direction whereby to present similar frequency transmission characteristics to the sampled pixel values and to the vertically-interpolated pixel values.

2. Television signal processing apparatus according to claim 1, wherein said enhancement component determining means (24) comprises a plurality of delay circuits (2-7) each having a delay amount of a sampling period of said pixel element data.

3. Television signal processing apparatus according to claim 1, wherein said enhancement component determining means (24) comprises a plurality of coefficient multipliers (8-11) for multiplying said five or more pixel values by predetermined coefficients;
a synthesising circuit (14) for synthesising output signals of said coefficient multipliers; and
an amplifier (15) for setting a gain of an output signal of said synthesising circuit.

4. Television signal processing apparatus according to claim 1, 2 or 3, wherein the interpolation means (23) applies at least vertical interpolation, either alone or in addition to horizontal interpolation, between sampled pixel values of said field of the input television signal whereby to produce interpolated pixel values, and comprising:
a line buffer (21) for storing pixel data of one vertical column; and
means for generating an address signal of said line buffer.

5. Television signal processing apparatus for constructing an image plane by interpolation between sampled values of pixels in a field of an input television signal, comprising:
means (23) for applying a horizontal interpolation by averaging of two horizontally-adjacent sampled pixel values of said field of the input television signal whereby to produce an interpolated pixel value;
means (24) for determining the value of an enhancement component for an object pixel value, the enhancement component determining means (24) comprising a one-dimensional digital filter (2-14) operative on a plurality of pixel values selected from the group comprising the object pixel value and values of adjacent sampled pixels and horizontally-interpolated pixels aligned with the object pixel in the horizontal direction and being adapted to treat each sampled pixel value and horizontally-interpolated pixel value in turn as the object pixel value; and
means (25) for adding the enhancement component to the corresponding sampled pixel value or horizontally-interpolated pixel value;
characterised in that the digital filter (2-14) in the enhancement component determining means (24) is adapted to operate on values of a group of five or more pixels aligned in said horizontal direction whereby to present similar frequency transmission characteristics to the sampled pixel values and to the horizontally-interpolated pixel values.

## Patentansprüche

1. Fernsehsignal-verarbeitungsgerät zum Aufbau einer Bildebene durch Interpolation zwischen abgetasteten Pixelwerten in einem Teilbild eines Eingangs-Fernsehsignals, mit:
einer Einrichtung (23) zur Anwendung einer vertikalen Zeilenmittelinterpolation zwischen zwei benachbarten abgetasteten Pixelwerten des Teilbildes des Eingangs-Fernsehsignals, um dadurch einen interpolierten Pixelwert zu erzeugen;
einer Einrichtung (24) zur Bestimmung des Wertes einer Verbesserungskomponente für einen Objektpixelwert, wobei die Verbesserungskomponentenbestimmungseinrichtung (24) ein eindimensionales Digitalfilter (2-14) besitzt, welches bei mehreren Pixelwerten wirksam ist, die von einer Gruppe ausgewählt sind, die den Objektpixelwert und die Werte von benachbarten abgetasteten Pixeln und vertikal-interpolierten Pixeln umfassen, die mit dem Objektpixel in der vertikalen Richtung fluchten und geeignet sind, jeden abgetasteten Pixelwert und vertikal-interpolierten Pixelwert der Reihe nach als Objektpixelwert zu behandeln; und
einer Einrichtung (25) zum Addieren der Verbesserungskomponente mit dem entsprechenden abgetasteten Pixelwert oder dem vertikal-interpolierten Pixelwert;
**dadurch gekennzeichnet, daß**
das Digitalfilter (2-14) in der Verbesserungskomponentenbestimmungseinrichtung (24) angepaßt ist, bei Werten einer Gruppe von fünf oder mehr Pixeln wirksam zu sein, die in der vertikalen Richtung fluchten, um dadurch ähnliche Frequenzübertragungscharakteristiken in bezug auf die abgetasteten Pixelwerte und auf die vertikal-interpolierten Pixelwerte zu zeigen.

2. Fernsehsignal-Verarbeitungsgerät nach Anspruch 1, wobei die Verbesserungskomponentenbestimmungseinrichtung (24) mehrere Verzögerungsschaltungen (2-7) besitzt, die jeweils eine Verzögerungshöhe einer Abtastperiode der Pixelelementdaten besitzen.

3. Fernsehsignal-Verarbeitungsgerät nach Anspruch 1, wobei die Verbesserungskomponentenbestimmungseinrichtung (24) mehrere Koeffizienten-Multiplizierer (8-11) besitzt, um die fünf oder mehr Pixelwerte mit vorgegebenen Koeffizienten zu multiplizieren;
eine Synthesizer-Schaltung (14), um Ausgangssignale der Koeffizienten-Multiplizierer zu synthetisieren; und
einen Verstärker (15) zur Einstellung eines Verstärkungsfaktors eines Ausgangssignals der Synthesizer-Schaltung.

4. Fernsehsignal-Verarbeitungsgerät nach Anspruch 1, 2 oder 3, wobei die Interpolationseinrichtung (23) zumindest eine vertikale Interpolation entweder alleine oder zusätzlich zur horizontalen Interpolation zwischen abgetasteten Pixelwerten des Teilbilds des Eingangs-Fernsehsignals anwendet, um dadurch interpolierte Pixelwerte zu erzeugen, und aufweist:
einen Zeilenpufferspeicher (21) zum Speichern von Pixeldaten einer vertikalen Spalte; und
eine Einrichtung zur Erzeugung eines Adreßsignals des Zeilenpufferspeichers.

5. Fernsehsignal-Verarbeitungsgerät zum Aufbau einer Bildebene durch Interpolation zwischen abgetasteten Pixelwerten in einem Teilbild eines Eingangs-Fernsehsignals, mit:
einer Einrichtung (23) zur Anwendung einer horizontalen Interpolation durch Durchschnittsbildung von zwei horizontal benachbarten abgetasteten Pixelwerten des Teilbilds des Eingangs-Fernsehsignals, um dadurch einen interpolierten Pixelwert zu erzeugen;
einer Einrichtung (24) zur Bestimmung des Wertes einer Verbesserungskomponente für einen Objektpixelwert, wobei die Verbesserungskomponentenbestimmungseinrichtung (24) ein eindimensionales Digitalfilter (2-14) besitzt, welches bei mehreren Pixelwerten wirksam ist, die von der Gruppe ausgewählt sind, die den Objektpixelwert und Werte von benachbarten abgetasteten Pixeln und horizontal-interpolierten Pixeln besitzen, die mit dem Objektpixel in der horizontalen Richtung fluchten und die angepaßt sind, jeden abgetasteten Pixelwert und horizontal-interpolierten Pixelwert der Reihe nach als Objektpixelwert zu behandeln; und
einer Einrichtung (25) zur Addierung der Verbesserungskomponente zum entsprechenden abgetasteten Pixelwert oder horizontal-interpolierten Pixelwert;
dadurch gekennzeichnet, daß
das Digitalfilter (2-14) in der Verbesserungskomponentenbestimmungseinrichtung (24) angepaßt ist, bei Werten einer Gruppe von fünf oder mehr Pixeln wirksam zu sein, die in der horizontalen Richtung fluchten, um dadurch ähnliche Frequenzübertragungscharakteristiken in bezug auf die abgetasteten Pixelwerte und auf die horizontal-interpolierten Pixelwerte zu zeigen.

## Revendications

1. Appareil de traitement de signal de télévision pour construire un plan image par interpolation entre des valeurs échantillonnées de pixels dans une trame d'un signal de télévision d'entrée, comprenant :
un moyen (23) pour appliquer une interpolation de ligne moyennée verticale entre deux valeurs de pixels échantillonnés voisins de ladite trame du signal de télévision d'entrée pour ainsi produire une valeur de pixel interpolée ;
un moyen (24) pour déterminer la valeur d'une composante d'amélioration pour une valeur de pixel objet, le moyen de détermination de composante d'amélioration (24) comprenant un filtre numérique monodimensionnel (2-14) opérant sur une pluralité de valeurs de pixel choisies parmi le groupe comprenant la valeur de pixel objet et des valeurs de pixels échantillonnés adjacents et de pixels interpolés verticalement alignés avec le pixel objet suivant la direction verticale et étant adapté pour traiter chaque de pixel échantillonné et valeur de pixel interpolé verticalement tour à tour en tant que valeur de pixel objet ; et
un moyen (25) pour additionner la composante d'amélioration à la valeur de pixel échantillonné ou à la valeur de pixel interpolé verticalement correspondante,
caractérisé en ce que le filtre numérique (2-14) dans le moyen de détermination de composante d'amélioration (24) est adapté pour opérer sur des valeurs d'un groupe de cinq pixels ou plus alignés suivant ladite direction verticale afin d'ainsi présenter des caractéristiques de transmission de fréquence similaires pour les valeurs de pixels échantillonnés et les valeurs de pixels interpolés verticalement.

2. Appareil de traitement de signal de télévision selon la revendication 1, dans lequel ledit moyen de détermination de composante d'amélioration (24) comprend une pluralité de circuits de retard (2-7) dont chacun présente une valeur de retard d'une période d'échantillonnage desdites données élémentaires de pixel.

3. Appareil de traitement de signal de télévision selon la revendication 1, dans lequel ledit moyen de détermination de composante d'amélioration (24) comprend :
une pluralité de multiplicateurs de coefficient (8-11) pour multiplier lesdites cinq valeurs de pixel ou plus par des coefficients prédéterminés ;
un circuit de synthèse (14) pour synthétiser des signaux de sortie desdits multiplicateurs de coefficient ; et
un amplificateur (15) pour établir un gain d'un signal de sortie dudit circuit de synthèse.

4. Appareil de traitement de signal de télévision selon la revendication 1, 2 ou 3, dans lequel le moyen d'interpolation (23) applique au moins une interpolation verticale, soit seule, soit en plus d'une interpolation horizontale, entre des valeurs de pixels échantillonnés de ladite trame du signal de télévision d'entrée pour ainsi produire des valeurs de pixels interpolés, et comprenant :
un tampon de ligne (21) pour stocker des données de pixel d'une colonne verticale ; et
un moyen pour générer un signal d'adresse dudit tampon de ligne.

5. Appareil de traitement de signal de télévision pour construire un plan image par interpolation entre des valeurs échantillonnées de pixels dans une trame d'un signal de télévision d'entrée, comprenant :
un moyen (23) pour appliquer une interpolation horizontale en effectuant la moyenne de deux valeurs de pixels échantillonnés horizontalement adjacents de ladite trame du signal de télévision d'entrée pour ainsi produire une valeur de pixel interpolée ;
un moyen (24) pour déterminer la valeur d'une composante d'amélioration pour une valeur de pixel objet, le moyen de détermination de composante d'amélioration (24) comprenant un filtre numérique monodimensionnel (2-14) opérant sur une pluralité de valeurs de pixel choisies parmi le groupe comprenant la valeur de pixel objet et des valeurs de pixels échantillonnés adjacents et de pixels interpolés horizontalement alignés avec le pixel objet suivant la direction horizontale et étant adapté pour traiter chaque valeur de pixel échantillonné et valeur de pixel interpolé horizontalement tour à tour en tant que valeur de pixel objet ; et
un moyen (25) pour additionner la composante d'amélioration à la valeur de pixel échantillonné ou à la valeur de pixel interpolé horizontalement correspondante,
caractérisé en ce que le filtre numérique (2-14) dans le moyen de détermination de composante d'amélioration (24) est adapté pour opérer sur des valeurs d'un groupe de cinq pixels ou plus alignés suivant ladite direction horizontale afin d'ainsi présenter des caractéristiques de transmission de fréquence similaires pour les valeurs de pixels échantillonnés et les valeurs de pixels interpolés horizontalement.
